Europäisches Patentamt

European Patent Office

Office européen des brevets

(19)

(11) Veröffentlichungsnummer : **0 245 301**
**B1**

(12) **EUROPÄISCHE PATENTSCHRIFT**

(45) Veröffentlichungstag der Patentschrift :
28.03.90

(51) Int. Cl.⁵ : **C 12 G 3/00**, B 67 D 1/00

(21) Anmeldenummer : 86906031.9

(22) Anmeldetag : 04.11.86

(86) Internationale Anmeldenummer :
PCT/AT 86/00070

(87) Internationale Veröffentlichungsnummer :
WO/87026 (07.05.87 Gazettee 87/10)

(54) VERFAHREN ZUM HERSTELLEN EINES KOHLENSÄUREHÄLTIGEN HOPFEN-MALZGETRÄNKES UND AUSSCHENK-VORRICHTUNG FÜR DIESES GETRÄNK.

(30) Priorität : 04.11.85 AT 3164/85

(43) Veröffentlichungstag der Anmeldung :
19.11.87 Patentblatt 87/47

(45) Bekanntmachung des Hinweises auf die Patenter-teilung : 28.03.90 Patentblatt 90/13

(84) Benannte Vertragsstaaten :
AT BE CH DE FR GB IT LI LU NL SE

(56) Entgegenhaltungen :
CA--A-- 880 876
CH--A-- 486 555
DE--B-- 1 757 283
FR--A-- 1 168 795
FR--A-- 2 149 258
NL--C-- 65 178
US--A-- 2 382 059
US--A-- 3 066 026
US--A-- 3 113 029

(73) Patentinhaber : PACHERNEGG, Rudolf
Maria Theresia Strasse 22
A-4600 Wels (AT)

(72) Erfinder : PACHERNEGG, Rudolf
Maria Theresia Strasse 22
A-4600 Wels (AT)

(74) Vertreter : Hübscher, Heiner, Dipl.-Ing. et al
Spittelwiese 7
A-4020 Linz (AT)

**Beschreibung**

Die Erfindung betrifft ein Verfahren zum Herstellen eines kohlensäurehältigen Hopfen-Malzgetränkes, bei dem aus Malzextrakt, Hopfenkonzentrat und Hefe unter Wärmebehandlung, Fermentation, Filterung und Pasteurisierung ein Würzkonzentrat erzeugt, haltbar verpackt und für den Verbrauch mit Wasser und Kohlensäure verdünnt wird.

Ferner betrifft die Erfindung eine Ausschenkvorrichtung zur Abgabe eines nach diesem Verfahren zubereiteten Getränkes, in welcher Ausschenkvorrichtung Wasser, $CO_2$ und ein Konzentrat in einstellbaren Mengenverhältnissen mischbar sind, so daß an einem Auslaß das fertige Getränk austritt.

Es besteht seit langem ein Bedürfnis nach der Schaffung eines Hopfen-Malzgetränkes, welches in seinem Geschmack den herkömmlichen Biersorten gleich oder ähnlich, dabei aber alkoholfrei oder zumindest sehr alkoholarm ist. Eine weitere Forderung, die an ein derartiges Getränk gestellt wird, besteht darin, daß das Getränk in der Schaumbildung und in der Konsistenz des Schaumes weitgehende Ähnlichkeiten bzw. Übereinstimmungen mit herkömmlichen Biersorten haben soll. Die Zusatzforderung, das Getränk aus einem Konzentrat dem erst vor dem Verbrauch Wasser und Kohlensäure zugesetzt werden, zuzubereiten, soll dazu beitragen, Transportvolumen und -gewicht vom Erzeuger zum Verbraucher hin zu verringern.

Es wurde schon mehrfach vorgeschlagen, normales Bier zunächst im wesentlichen fertigzustellen, dann durch fraktionierte Destillation die Kohlensäure ($CO_2$) auszutreiben und den Alkohol abzutrennen sowie den Rückstand einzudicken, so daß ein Konzentrat erhalten wird, das durch Aufspritzen mit kohlensäurehältigem Wasser zu einem trinkbaren Getränk zubereitet wird. Geschmack, Konsistenz und Schaumbildung sind unbefriedigend. Vor allem kommt es beim Eindickvorgang und bei der Destillation zu einer entscheidenden Veränderung des Geschmacks gegenüber dem typischen Biergeschmack. Es ist bestenfalls eine Eindickung und damit spätere Verdünnung im Verhältnis von 1 : 4 möglich.

Aus der DE-OS 1 417 566 ist ein Verfahren zur Herstellung alkoholfreier, malzhaltiger Nahrungs- und Genußmittel bekannt, bei dem Malzzuckersaft in Gegenwart einer gerbsäurehaltigen Substanz, beispielsweise Hopfen, gekocht und dadurch Trübstoffe durch Ausflockung und Abfilterung ausgeschieden werden und dieser gekochte Malzzuckersaft nach Abkühlung kurze Zeit mit Bierhefe in Berührung gebracht und anschließend zentrifugiert oder filtriert wird. Die Bierhefe dient hier vorwiegend als Hilfsmittel zum Ausscheiden der unerwünschten Stoffe und wird durch Kältebehandlung daran gehindert, den Malzzucker aufzuspalten. Die so behandelte Malzzuckerlösung wird bis zur Pulver- oder Sirupform eingedickt und kann als Backhilfsmittel, Nahrungs- und Genußmittel dienen, wobei auch seine Verwendung bei der Zubereitung alkoholfreier Getränke möglich ist, zu welchem Zweck das eingedickte Produkt mit karbonisiertem Wasser verdünnt wird. Es läßt sich ein malzbierähnlicher Geschmack erzielen, doch weicht das Getränk hinsichtlich der Schaumbildung und dem tatsächlichen Geschmack von herkömmlichen Biersorten ab. Um das eingedickte Produkt, das sehr hygroskopisch ist, zu schützen, ist es bekannt, es für den Versand mit Kohlensäure zu versetzen.

Alkoholarme Biere oder Hopfen-Malzgetränke lassen sich auch nach Sonderrezepten, ähnlich wie herkömmliche Biersorten herstellen, wobei man den Gärvorgang frühzeitig unterbricht, so daß nur geringe Alkoholmengen auftreten. Solche Dünnbiere haben einen von andere Biersorten abweichenden Geschmack und lassen sich praktisch nicht zu einem Konzentrat verarbeiten.

Für die Zubereitung alkoholfreier Getränke ist eine Reihe von Ausschankgeräten der eingangs genannten Art bekannt. Bei diesen beispielsweise aus den DE-OSen 28 55 839, 30 46 545, 32 13 580 und 34 17 005 bekannten Ausschankgeräten wird ein Konzentrat im wesentlichen drucklos über eine Dosierdüse oder ein Auslaufrohr einem Mischbehälter zugeführt, der in einem entsprechenden Mengenverhältnis mit $CO_2$-hältigem, also karbonisiertem Wasser beschickt wird, so daß sich Konzentrat und karboniertes Wasser zu einem Getränk mischen, das am Zapfhahn drucklos abgegeben werden kann. Es ist dabei auch bekannt, den Vorratsbehälter für das Konzentrat und den Karbonisator in einem Kühlschrank oder sonstigem Kühlgerät anzuordnen. Das Problem einer starken Schaumbildung wie sie bei der Verdünnung eines Würzkonzentrates von Hopfen-Malzgetränken auftritt, ist hier nicht gegeben. Ein druckloser Ausschank von Bier und bierähnlichen Getränken wäre unerwünscht. Das Würzkonzentrat würde nur ungenügend aufgelöst. Auch die richtige Dosierung von Würzkonzentrat und karbonisiertem Wasser wäre nicht gewährleistet. Auch andere bekannte Ausschankgeräte, bei denen ein Geschmackskonzentrat z. B. ein Fruchtsaft unter Druck gesetzt wird, sind für den Ausschank von Hopfen-Malzgetränken der eingangs genanten Art nicht geeignet. Diese Geräte enthalten $CO_2$-Vorratsbehälter, Anschlüsse für eine Wasserleitung und sind mit druckfesten Behältern für ein Geschmackskonzentrat z. B. Fruchtsaft kuppelbar, wobei die $CO_2$-Leitung zu diesem Behälter geführt ist. Das Konzentrat wird hier mit Hilfe von $CO_2$ aus dem druckfesten Behälter ausgetrieben und das $CO_2$-Konzentrat-Gemisch durch einen Injektor in eine Leitung eingetragen, in der das Wasser geführt wird, so daß die Komponenten des Getränkes dosiert vermischt werden und am Auslaß das fertige Getränk unter Druck abgegeben werden kann. Beim Austreiben des Würzkonzentrates mit $CO_2$ käme es bei Hopfen-Malzgetränken der genannten Art zu einer extremen Schaumbildung und damit zu einer Fehlfunktion des ganzen Gerätes.

Aufgabe der Erfindung ist die Schaffung eines Verfahrens der eingangs genannten Art, das mit einfacheren Mitteln als bisher die Erzeugung eines Würzkonzentrates und die Herstellung eines trinkfertigen Hopfen-Malzgetränkes ermöglicht, wobei es möglich sein soll, herkömmlichen Bieren ähnliche Geschmacksrichtungen zu erzeugen und am fertigen Getränk auch einen bierartigen Schaum zu erhalten. Eine Teilaufgabe der Erfindung besteht in der Schaffung einer für das Würzkonzentrat geeigneten Ausschenkvorrichtung.

Die gestellte Hauptaufgabe wird prinzipiell mit den im kennzeichnenden Teil des Anspruches 1 angegebenen Verfahrensschritten gelöst. Die Unteransprüche 2 bis 6 geben besonders vorteilhafte Ausbildungen der einzelnen Verfahrensschritte an.

Eine Grundüberlegung des erfindungsgemäßen Verfahrens besteht darin, daß man sich bei der Herstellung des Würzkonzentrates gedanklich von den Verfahrensschritten bei der üblichen Bierherstellung lösen muß. Bei der üblichen Bierherstellung kommt es erst bei der Gärung zu einer Ausscheidung der Trübstoffe, insbesondere des Eiweißes. Erst nach dieser Ausscheidung ist ein brauchbares Getränk bzw. eine Getränkegrundlage vorhanden.

Bei dem erfindungsgemäßen Verfahren wird aus der Erkenntnis heraus, daß eine längere Gärung vor allem bei höheren Maltosekonzentrationen zwangsweise zu einem hohen Alkoholgehalt führt von Haus aus eine Reinigung des Malzkonzentrates von Eiweiß vorgenommen, so daß für diese Reinigung keine Gärung mehr notwendig ist. Die vorgenommene Fermentation soll nicht der Alkoholumwandlung dienen, sondern hat die Aufgabe, die Maltosespitze abzubauen und gleichzeitig im Würzkonzentrat ohne künstliche Aromastoffe den typischen Biergeschmack zu erzeugen. Die Fermentierung erfolgt unter hoher Maltosekonzentration bei starker Hopfung und unter konstanter Temperatur. Beispielsweise wird mit einem Malzextrakt gearbeitet, das mit Wasser, bezogen auf das Gesamtgewicht der Lösung, auf Werte zwischen 30 und 40 Gew.%, insbesondere 35 Gew.% Zuckergehalt (aus Maltose und Glucose), verdünnt ist, wobei bei Temperaturen von etwa 30 °C fermentiert wird. Die Fermentation wird nur während etwa 24 Stunden bzw. zum Erreichen eines Alkoholgehaltes von maximal 2,5 Vol.% durchgeführt und dann durch Schockkühlung unterbrochen. Bei diesen Werten sind Verdünnungen des erzeugten Würzkonzentrates im Verhältnis von 1 : 9 bis 1 : 10 möglich. Selbst wenn die geringe Alkoholmenge beim Pasteurisieren nicht ausgetrieben wird, hat das fertige Getränk einen vernachlässigbar kleinen Alkoholgehalt.

Nach der Pasteurisierung kann man das Substrat fließend zur Abfüllung leiten und dabei weitere Aromastoffe, insbesondere Hopfenaromastoffe, injizieren, um so bestimmte Geschmacksrichtungen zu erhalten.

Insgesamt wird bei der Herstellung des Würzkonzentrates neben der hohen Konzentration erreicht, daß dieses Konzentrat nicht eintrübt, ein stabiles Aromagefüge behält und sich auch in seinem Geschmack bei längerer Lagerung nicht ändert. Bei der Verdünnung läßt sich ein bierähnliches Schaumgefüge erzeugen. Hier besteht ein wesentlicher Verfahrensschritt darin, daß die Verdünnung des Konzentrates durch Vermischung mit Sodawasser, insbesondere im Durchlaufverfahren, und nicht wie in den herkömmlichen Automaten für Fruchtgetränke u. dgl. durch Eintragen des Konzentrates mit Hilfe von $CO_2$ in das Wasser vor sich geht.

Für die Zubereitung des trinkfertigen Getränkes wird eine Ausschenkvorrichtung mit den Merkmalen des Anspruches 7 verwendet. Wenn man gemäß Anspruch 8 die Dosierpumpe für das Würzkonzentrat als Membranpumpe ausbildet, deren Antriebszweig in dem dem Karbonisator zugeführten $CO_2$-Gas- strom liegt, dann wird die Vorrichtung einfach und genau. Mit der Ausschenkvorrichtung können karbonisiertes Wasser und Würzkonzentrat unter Druck im richtigen Verhältnis gemischt und unter Druck ausgeschenkt werden, wobei nach dem Mischbereich noch eine Nachkühlung und Beruhigung vorgenommen werden kann.

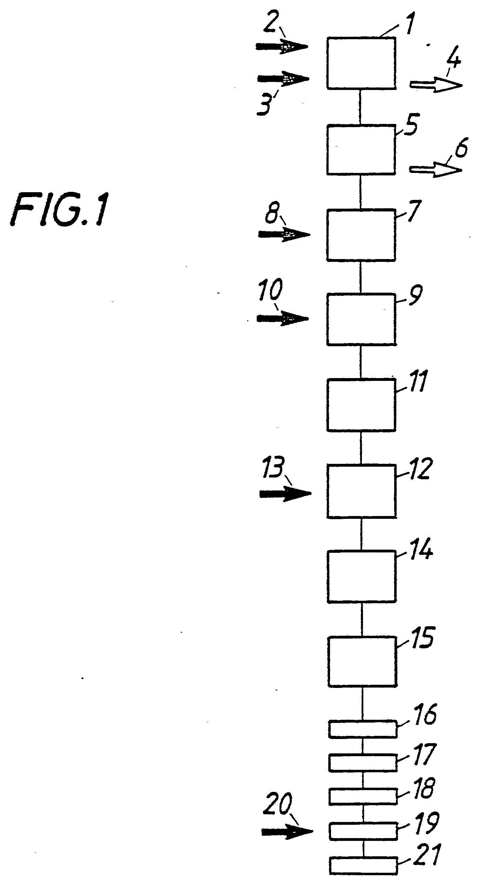

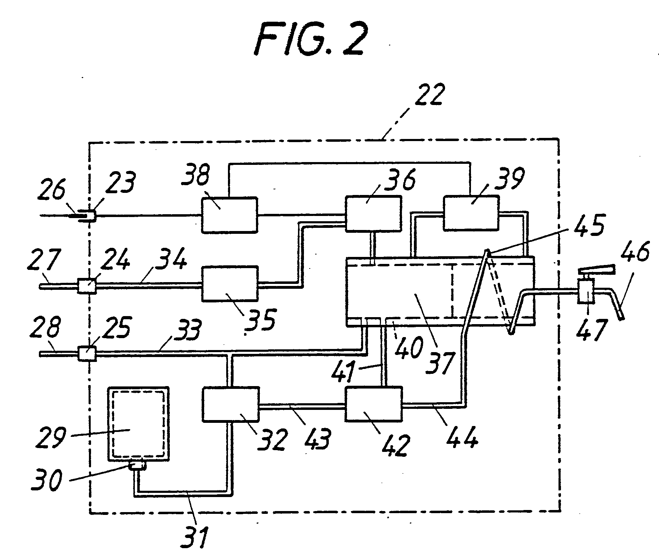

In der Zeichnung ist der Erfindungsgegenstand beispielsweise veranschaulicht. Es zeigen Fig. 1 ein Blockdiagramm zur Erläuterung des Herstellungsverfahrens des Würzkonzentrates und Fig. 2 ein Blockschema einer Ausschenkvorrichtung.

In einer Verfahrensstufe 1 wird in einem geeigneten Behälter flüssiges, helles, herbes Malzextrat, das mit Wasser beispielsweise auf 35 Gew.% Zuckergehalt (aus Maltose und Glucose) verdünnt und dem Behälter 1, wie durch dem Pfeil 2 angedeutet, zugeführt wurde, unter Zugabe eines Fällmittels (Pfeil 3) auf 75° C erwärmt. Das Fällmittel fällt das durch die Erwärmung koagulierende Eiweiß aus, das nun gemeinsam mit dem gegebenenfalls aus gebrannter Tonerde bestehenden Fällmittel ausgeschieden wird (Pfeil 4).

Das so vorgereinigte Malzextrakt wird in einer Dekantierungsstufe 5 eine vorgewählte Zeitspanne belassen. Der sich bildende Sumpf aus Trübstoffen wird abgeschieden (Pfeil 6). Dem nun vorliegenden blanken, malzhältigen Fundus wird in einer Verfahrensstufe 7 Hopfenkonzentrat (Pfeil 8) zugesetzt. In einer Verfahrensstufe 9 erfolgt die Zugabe von Spezialhefe (Bierhefe, Pfeil 10).

Nun wird in einer Verfahrensstufe 11 der blanke, gehopfte und mit Hefe versehene Fundus bei einer kontrollierten Temperatur von beispielsweise 30 °C für eine gewählte Zeitspanne von beispielsweise 24 Stunden oder bis zum Erreichen eines vorbestimmten Alkoholgehaltes von beispielsweise 2,5 Vol% fermentiert, wobei die Maltosespitze abgebaut wird. In einer Verfahrensstufe 12 werden weitere Aufbau- oder Aromastoffe, Hopfenkonzentrat u. dgl. zugesetzt. Nun erfolgt in einer Verfahrensstufe 14 eine Unterbrechung der Fermentation durch Schockkühlung auf den Gefrierpunkt. In einer Verfahrensstufe 15 wird die nun erhaltene Würze über Kieselgur filtriert, so daß in der Stufe 16 eine blanke Würze vorliegt, die in einer Stufe 17 durch Erhitzung während 30 sec bis auf 95 °C, also in die Nähe des Siedepunktes, fließend pasteurisiert und in einer Stufe 18 sofort wieder abgekühlt wird. Dieser abgekühlten, pasteurisierten, blanken Würze können in einer Stufe 19 des Verfahrens während des Vorbeiströmens durch Injektion weitere Hopfen- oder Aromastoffe zugesetzt werden. Die Menge dieser Zusätze liegt jedenfalls unter 10 % des Gesamtvolumens. Anschließend erfolgt in einer Stufe 21 des Verfahrens eine dosierte, sterile Kaltabfüllung des Würzkonzentrates in Vorratsbehälter, insbesondere jener Art, bei denen in einem stabilen Außenbehälter eine aus einer Folie gebildete, sich mit der Entleerung zusammenlegende Seele vorhanden ist. In diesen Behältern kann das Würzkonzentrat aufbewahrt bzw. zu den jeweiligen Verbrauchern transportiert und dort beispielsweise in Vorrichtungen nach Fig. 2 eingesetzt werden.

Eine Ausschenkvorrichtung nach Fig. 2 besitzt beispielsweise einen Kasten 22, der Steckanschlüsse 23, 24, 25 oder sonstige Kupplungen für eine elektrische Anschlußleitung 26, eine Wasserleitung 27 und eine zu einem CO₂-Vorrat führende Leitung 28 aufweist. In den Kasten 22 ist ein Vorratsbehälter 29 mit nach unten weisender Austragöffnung auswechselbar einsetzbar, welcher Vorratsbehälter das Würzkonzentrat enthält. Über eine sterile Kupplung 30 wird ein Anschluß mit einer Leitung 31 hergestellt, die zu einer Dosierpumpe, beispielsweise einer Membranpumpe 32, führt. Die Membranpumpe 32 ist als pneumatisch betätigbare Pumpe ausgeführt und zu diesem Zweck an die im Inneren des Kastens 22 geführte CO₂-Leitung 33 angeschlossen.

Eine an die Kupplung 24 anschließende Wasserleitung 34 ist über eine Aufbereitungsanlage 35, die Filter, Enthärtungseinrichtungen usw. enthält, geführt und wird, falls kein konstanter Wasserdruck gewährleistet ist, zu einer Dosierpumpe 36 geleitet, sonst aber direkt in den Mischraum eines Karbonisators 37 geführt, in dem auch die CO₂-Leitung 33 mündet. Für die pumpe 36 kann ein von einer Schalteinheit 38 gesteuerter Elektromotor vorgesehen sein. Die Schalteinheit 38 steuert auch den Motor 39 eines Kühlkompressors, der einen Kühlmantel 40 des Karbonisators 37 versorgt. Im Karbonisator 37 werden das Wasser und das CO₂ zu Sodawasser aufbereitet, das über eine Leitung 41 einem Mischer 42 zugeführt wird, an den über eine Leitung 43 auch die Dosierpumpe 32 anschließt. Im Mischer 42 erfolgt eine dosierte Vermischung des Sodawassers mit dem Würzkonzentrat. Das fertiggestellte Getränk wird über eine Leitung 44 zur Nachkühlung und Beruhigung in Kühlschlangen 45 um den Kühlmantel 40 und schließlich zu einem Auslaß 46 mit vorgeordneter Zapfvorrichtung 47 geleitet.

Bei der Ausführung nach Fig. 2 bewirkt das Öffnen des Zapfhahnes 47 das Nachströmen von Getränk zum Auslaß 46, wodurch gleichzeitig der Druck im Karbonisator 37 absinkt. Nachströmendes CO₂-Gas betätigt die Dosierpumpe 32, so daß diese dem Mischer 42 Würzkonzentrat im vorgegebenen Verhältnis zum CO₂-Gas zuführt. Die Wasserzufuhr wird über die Steuereinrichtung 38 und die pumpe 36 gesteuert. Mit Hilfe der Kühleinrichtung 38, 40 kann innerhalb des Karbonisators 37 ein Eisvorrat erzeugt werden, so daß trotz einer relativ niedrigen Gesamtkühlleistung ein Pufferbetrieb mit großen Abgabemengen bei Stoßzeiten möglich ist.

Ausführungsbeispiel :

In der Verfahrensstufe 1 werden 100 kg Malzextrakt mit 196 kg H₂O verdünnt und unter Zugabe von 5 kg gebrannter Tonerde in Pulverform aus 75 °C erwärmt. Das durch die Erwärmung koagulierende Eiweiß wird in einem Separator, der aus einer Zentrifuge bestehen oder Filtertücher enthalten kann, gemeinsam mit der das Fällmittel bildenden gebrannten Tonerde abgeschieden.

Das so vorgereinigte Malzextrakt wird zwei Stunden in der Dekantierungsstufe 5 stehengelassen und dann durch Abgießen von den Trübstoffen getrennt. In der Verfahrenstufe 7 werden je nach gewünschter Geschmacksrichtung 0,7 bis 3 kg Hopfenkonzentrat zugesetzt, wonach 1,5 kg Spezialhefe beigegeben werden.

In der Verfahrensstufe wird der blanke, gehopfte und mit Hefe versehene Fundus bei 30 °C 24 Stunden belassen, wodurch ein Alkoholgehalt von 2,5 Vol % erreicht wird.

In der Verfahrensstufe 12 werden weitere Aufbau- und Aromastoffe, beispielsweise 100 g Zitronensäure zur Erzielung eines herben Geschmackes zugesetzt. Dann erfolgt in der Verfahrensstufe 14 die Unterbrechung der Fermentation durch Schockkühlung auf den Gefrierpunkt und die Filtrierung über Kieselgur nach der Verfahrensstufe 15. Die blanke Würze wird durch Erhitzung während 30 Sekunden auf 95 °C fließend pasteurisiert und in der Stufe 18 wieder abgekühlt. In der Verfahrensstufe 19 können weitere Hopfen- oder Aromastoffe praktisch etwa in halber Menge, wie in der Verfahrensstufe 12 zugesetzt werden. Anschließend erfolgt die Kaltabfüllung des Würzkonzentrates in die Verpackungsbehälter. Vorzugsweise werden Behälter mit einem Füllvolumen von 10 kg verwendet.

**Patentansprüche**

1. Verfahren zum Herstellen eines kohlensäurehältigen Hopfen-Malzgetränkes, bei dem aus Malzextrakt, Hopfenkonzentrat und Hefe unter Wärmebehandlung, Fermentation, Filterung und Pasteurisierung ein Würzkonzentrat erzeugt, haltbar verpackt und für den Verbrauch mit Wasser und Kohlensäure verdünnt wird, dadurch gekennzeichnet, daß für das Würkonzentrat aus verdünntem Malzextrakt Eiweiß durch Erwärmung über die Koagulationstemperatur und Ausfällung ausgeschieden, der erhaltene Fundus mit Hopfenkonzentrat versetzt und dieser blanke, gehopfte Fundus nach Zugabe von Hefe einer Fermentation unterzogen wird, wonach die Fermentation nach allfälliger Zugabe von Aufbau- und Aromastoffen zum Fundus durch Schockkühlung unterbrochen, das Substrat gegebenenfalls filtiert und pasteurisiert und als fertiges Würzkonzentrat verpackt wird, und daß zur Herstellung des trinkfertigen Getränkes das Würzkonzentrat dosiert einer Mischstufe zugeführt, in dieser kontinuierlich mit $CO_2$-hältigem Wasser verdünnt und schließlich nach allfälliger weiterer Kühlung vorzugsweise unter Druck stehend ausgeschenkt wird.

2. Verfahren nach Anspruch 1, dadurch gekennzeichnet, daß Malzextrakt mit Wasser auf 30 bis 40 Gew.% Zuckergehalt, insbesondere 35 Gew.% verdünnt, zur Ausfällung von Eiweißanteilen auf ca 75 °C erwärmt, mit einem Fällmittel versetzt und das Eiweiß mit dem Fällmittel abgetrennt wird.

3. Verfahren nach Anspruch 2, dadurch gekennzeichnet, daß der Malzextrakt nach dem Ausfällen des Eiweißanteiles in einer Dekantierungsstufe belassen und nach der Verweilzeit der blanke Fundus von dem sich bildenden Trübstoffsumpf getrennt und weiterbehandelt wird.

4. Verfahren nach einem der Ansprüche 1 bis 3, dadurch gekennzeichnet, daß der blanke, gehopfte Fundus nach Zugabe von Hefe bei einer Temperatur zwischen 28 und 32 °C, insbesondere 30 °C, während einer eine Vergärung nur eines kleinen Bruchteiles der Maltose zu Alkohol ergebenenden Zeitspanne, insbesondere ca 24 Stunden, bzw. bis zum Erreichen eines Alkoholgehaltes von maximal etwa 2,5 Vol% fermentiert und dann die Fermentation durch Schockkühlung auf den Gefrierpunktbereich unterbrochen wird.

5. Verfahren nach einem der Ansprüche 1 bis 4, dadurch gekennzeichnet, daß das Substrat nach der Pasteurisierung fließend zur Abkühlung geleitet und in das strömende Substrat weitere Aromastoffe, insbesondere Hopfenaromastoffe injiziert werden.

6. Verfahren nach einem der Ansprüche 1 bis 5, dadurch gekennzeichnet, daß für die Zubereitung des fertigen Getränkes Wasser in einem gekühlten Karbonisator mit $CO_2$ versetzt, dieses kohlensäurehältige Wasser der Mischstufe zugeführt und im Durchlaufverfahren zur Auflösung des Würzkonzentrates bzw. zur Mischung mit dem Würzkonzentrat eingesetzt wird.

7. Ausschenkvorrichtung gemäß Fig. 2 zur Abgabe eines nach dem Verfahren nach den Ansprüchen 1 bis 6 zubereiteten Getränkes, in welcher Ausschenkvorrichtung Wasser, $CO_2$ und ein Konzentrat in einstellbaren Mengenverhältnissen mischbar sind, so daß an einem Auslaß das fertige Getränk austritt, dadurch gekennzeichnet, daß die Vorrichtung einen gekühlten Karbonisator (37) zur Herstellung von kohlensäurehältigem Wasser aus Wasser und $CO_2$ und einen Mischer (42) enthält, der einerseits mit dem Karbonisator und andererseits über eine Dosiervorrichtung (32) mit einem sterilen Kupplungsanschluß (30) verbunden ist, an den das Würzkonzentrat enthaltende Packungen (29) steril anschließbar sind und dessen Auslaß über eine Kühlstufe mit einem Zapfhahn (47) in Verbindung steht.

8. Vorrichtung nach Anspruch 7, dadurch gekennzeichnet, daß die Dosiervorrichtung für das Würzkonzentrat als Dosierpumpe ausgebildet ist und aus einer Membranpumpe besteht, deren Antriebszweig in dem dem Karbonisator (37) zugeführten $CO_2$-Gasstrom liegt.

**Claims**

1. A method of producing a hop and malt drink containing carbon dioxide, and in which a wort concentrate is produced from malt extract, hop concentrate and yeast by heat treatment, fermentation, filtering and pasteurizing, is packed under stable conditions and is diluted with water and carbon dioxide for use, characterised in that in order to obtain the wort concentrate, protein is separated from dilute malt extract by heating above the coagulation temperature and by precipitation, hop concentrate is added to the resulting stock and, after adding yeast, the clear hopped stock is fermented, the fermentation is stopped by shock cooling after adding restorative and flavouring substances to the stock if required, the substrate is filtered if required and pasteurized and packed as a malt concentrate ready for use, and in order to prepare the drink for consumption, metered amounts of the malt concentrate are supplied to a mixing step, are continuously diluted therein with water containing $CO_2$, and finally are continuously dispensed, preferably under pressure, after additional cooling if required.

2. A method according to claim 1, characterised in that malt extract is diluted with water to a sugar content of 30 to 40 wt.%, more particularly 35 wt.%, is heated to about 75 °C in order to precipitate the protein content, is mixed with a precipitant and the protein and precipitant are separated.

3. A method according to claim 2, characterised in that after the protein content has been precipitated, the malt extract is left in a decanting step and after the residence time the clear stock is separated from the impurities collecting at the bottom and is additionally treated.

4. A method according to any of claims 1 to 3, characterised in that after adding yeast, the clear, hopped stock is fermented at a temperature between 28 and 32 °C, more particularly 30 °C, for a time sufficient for fermenting only a small fraction of the maltose to alcohol, more particularly for about 24 hours or until an alcohol content of not more than about 2.5 vol.% is obtained, and the fermentation is then stopped by shock cooling to near the freezing-point.

5. A method according to any of claims 1 to 4, characterised in that after pasteurizing, the substrate is continuously sent for cooling and additional flavouring substances, more particularly hop flavouring substances, are injected into the substrate as it flows.

6. A method according to any of claims 1 to 5, characterised in that in order to prepare the drink for consumption, $CO_2$ is added to water in a cooled carbonator and the carbonated water is supplied to the mixing step and used in a continuous process for dissolving the wort concentrate or for mixing therewith.

7. A dispenser according to claim 2 for delivering a drink prepared by the method according to claims 1 to 6, water, $CO_2$ and a concentrate being miscible in adjustable proportions in the dispenser, so that the finished drink flows out of an outlet, characterised in that the dispenser contains a cooled carbonator (37) for producing carbonated water from $CO_2$ and water, and a mixer (42) connected on one side to the carbonator and on the other side via a metering device (32) to a sterile coupling connection (30) to which the packages (29) containing the wort concentrate can be connected under sterile conditions, the outlet being connected via a cooling step to a tap (47).

8. A device according to claim 7, characterised in that the device for metering the wort concentrate is a metering pump and comprises a diaphragm pump having a drive arm disposed in the stream of $CO_2$ gas supplied to the carbonator (37).

## Revendications

1. Procédé de production d'une boisson au houblon/malt contenant du gaz carbonique, dans lequel un concentré de moût est produit par traitement thermique, fermentation, filtration et pasteurisation à partir d'extrait de malt, concentré de houblon et de levure, le concentré de moût est emballé pour être conservé et est dilué avec de l'eau et du gaz carbonique pour la consommation, caractérisé en ce que pour la préparation du concentré de moût l'albumine est éliminée par échauffement au-delà de la température de coagulation et précipitation d'un extrait de malt dilué, le fond ainsi obtenu est mélangé avec du concentré de houblon et ce fond blanc au houblon est soumis à une fermentation après addition de levure, après quoi la fermentation après l'addition facultative de substances de synthèse et d'arôme au fond est interrompue par refroidissement ultrarapide, le substrat est filtré et pasteurisé le cas échéant, et est emballé comme concentré de moût fini et que pour la production de la boisson prête à boire le concentré de moût est fourni de façon dosée à un étage mélangeur, est dilué dans celui-ci de façon continue avec de l'eau contenant du $CO_2$ et finalement, après réfrigération supplémentaire facultative, est débité de préférence sous pression.

2. Procédé selon la revendication 1, caractérisé en ce que l'extrait de moût est dilué avec de l'eau jusqu'à une teneur en sucre de 30 à 40 % en poids, plus particulièrement 35 % en poids, est chauffé à environ 75 °C pour la précipitation d'albumine, est mélangé avec un moyen de précipitation et l'albumine est éliminée avec le moyen de précipitation.

3. Procédé selon la revendication 2, caractérisé en ce qu'après la précipitation de l'albumine l'extrait de moût est retenu dans un étage de décantation et qu'après le temps de séjour le fond blanc est séparé de la matière trouble se décantant et est soumis au traitement ultérieur.

4. Procédé selon les revendications 1 à 3, caractérisé en ce que le fond blanc au houblon, après addition de levure, fermente à une température comprise entre 28 et 32 °C, en particulier 30 °C, pendant une période de temps, par exemple 24 heures, résultant dans la fermentation d'une petite fraction seulement du maltose en alcool, respectivement jusqu'à obtenir une teneur en alcool de maximum environ 2,5 % en volume et qu'alors la fermentation est interrompue par réfrigération ultrarapide jusque dans la zone du point de congélation.

5. Procédé selon l'une quelconque des revendications 1 à 4, caractérisé en ce qu'après la pasteurisation le substrat est dirigé en coulant vers le refroidissement et en ce que des matières aromatiques supplémentaires, en particulier des arômes du houblon, sont injectées dans le substrat coulant.

6. Procédé selon l'une quelconque des revendications 1 à 5, caractérisé en ce que pour la production de la boisson finie de l'eau est mélangée avec du $CO_2$ dans un carbonisateur refroidi, que cette eau contenant du gaz carbonique est alimentée vers l'étage mélangeur et est utilisée dans un procédé continu pour diluer le concentré de moût respectivement pour être mélangée avec le concentré de moût.

7. Dispositif de débit selon la figure 2 pour débiter une boisson préparée selon le procédé selon les revendications 1 à 6, dans lequel de l'eau, du $CO_2$ et un concentré peuvent être mélangés suivant des rapports de masse ajustables de sorte que la boisson finie sort à une sortie, caractérisé en ce que le dispositif contient un carbonisateur (37) refroidi pour préparer de l'eau contenant du gaz carbonique à partir d'eau et de $CO_2$ et un mélangeur (42) qui est relié d'un côté au carbonisateur et de l'autre côté par l'intermédiaire d'un dispositif de dosage (32) à un dispositif d'accouplement stérile (30) auquel les paquets (29) contenant le concentré de moût peuvent être accouplés de façon stérile et dont la sortie est connectée par l'intermédiaire d'un étage de réfrigération à un robinet (47).

8. Dispositif selon la revendication 7, caractérisé en ce que le dispositif de dosage pour le concentré de moût est conçu comme pompe de dosage et comprend une pompe à membrane dont la branche d'entraînement se trouve dans le flux de gaz carbonique alimenté dans le carbonisateur (37).

FIG.1

# FIG. 2